# EUROPEAN PATENT SPECIFICATION

(11) **EP 4 594 408 B1**
(45) Date of publication and mention of the grant of the patent: **19.08.2026**
(21) Application number: 23802010.1
(22) Date of filing: 17.10.2023
(51) Int. Cl.: C08K 3/22, C08K 3/26, C08K 3/36, C08K 5/00, C08K 5/21, C08K 5/3492, C08L 83/04

(54) **LIQUID SILICONE RUBBER COMPOSITION**
FLÜSSIGE SILIKONKAUTSCHUKZUSAMMENSETZUNG
COMPOSITION DE CAOUTCHOUC DE SILICONE LIQUIDE

(30) Priority: 19.10.2022 US 202263417354 P
(43) Date of publication of application: 06.08.2025
(73) Proprietor: Dow Silicones Corporation, Midland, Michigan 48686 (US)
(72) Inventor: BACKER, Michael, 65201 Wiesbaden (DE); GEYER, Florian, 65201 Wiesbaden (DE)
(74) Representative: Elkington and Fife LLP
(86) International application number: PCT/US2023/035280
(87) International publication number: WO 2024/086138

(56) References cited:
- WO-A1-2023/087233
- US-A- 5 153 244
- US-A- 5 989 719
- US-A1- 2020 270 500
- US-A1- 2021 040 322

## Description

The present disclosure relates to hydrosilylation (addition) curable silicone rubber compositions, to silicone elastomeric materials with an improved high temperature (greater than or equal to (≥190°C)) compression set in accordance with ISO 815-1 method A which are produced by curing said hydrosilylation (addition) curable silicone rubber compositions and to a method for preparing said silicone elastomeric materials. The present disclosure also extends to uses for such materials in or for the manufacture of silicone coatings for standard non-silicone insulators, as cable coatings e.g., for safety cables, in cable accessories such as electrical connectors, connector seals, terminations and wire seals, and for other electrical and electronic parts, particularly for the automotive industry and/or in or as hoses and gaskets for e.g., vehicle engines.

Hydrosilylation curable silicone rubber compositions containing:
(i) organopolysiloxane polymers having unsaturated (alkenyl and/or alkynyl) groups;
(ii) compounds containing silicon-bonded hydrogen atoms; and
(iii) a hydrosilylation catalyst
are known in the art and are used to prepare silicone elastomeric materials with a broad spectrum of physical properties including electrical insulation, resistance and stability to heat, freeze resistance, abrasion resistance, fire retardancy, and long-term flexibility. This unique combination of properties renders elastomers made from liquid silicone rubber suitable for utilisation in a wide range of electrical and/or insulative applications, such as in or for electrical connectors, commonly used to create closed electrical circuits in automotive, residential, and infrastructural settings.

For example, Silicone elastomers (both liquid silicone rubbers (LSRs) and high consistency rubbers (HCRs)) have been broadly utilized as seals in or for electrical connectors due to their excellent balance of mechanical properties, chemical and thermal stabilities and ease of processing. They may be used to mate rigid thermoplastic housing components forming a tight connection that provides both electrical and environmental isolation to connector junctions. These may be used in automotive vehicles which are becoming increasingly dependent on electrical and electronical systems for the full operation thereof, even more so since the introduction of electric and hybrid vehicles. Hence, electrical failures can lead to devices such as radio, light, ventilation etc. malfunctioning or breaking down. Many of the electrical connectors used for such devices rely on the aforementioned silicone rubber materials to prevent electrical failings and they need to be able to avoid failure in e.g., vehicles at increasing engine temperatures.

Many of these applications require silicone elastomeric materials to have a low compression set in addition to their electrical insulation and/or heat stability etc applications. Compression set is a key property of silicone elastomeric materials utilized in any of the above applications. Compression set is a thermally induced fatigue behavior of a silicone elastomeric material which may be defined as the loss in ability of said silicone elastomeric material to recover to its original thickness after compression for specific period of time at a set (elevated) temperature. A compression set value may be measured, for example, following the industrial standard ISO 815-1:2019 methods A, B or C and is identified as a percentage, such that if there is complete recovery, i.e., if the thickness of a test specimen is identical before and after the application of a load, the compression set is 0%; if, in contrast, a 25% compression of a silicone elastomeric material applied during a test remains unchanged when the load is removed, the compression set is 100% because it has failed to return to its original shape at all. Without being tied to current theories, it is believed is believed that the root cause of the inability of a silicone-based elastomeric material to recover to its original thickness after compression over a specified period of time at a set (elevated) temperature is that hydrosilylation curable silicone compositions often, if not always, do not undergo complete cure during the standard curing process. This is thought to at least partially be because of incomplete hydrosilylation due to steric hindrance during interaction of vinyl containing silicone polymers, Si-H cross-linker(s) and hydrosilylation catalysts (most typically platinum based catalysts. Thus, when a hydrosilylation cured silicone elastomeric material is compressed at an elevated temperature, further cross-linking may occur within the body of the silicone elastomeric material specifically at previously unreacted Si-H positions. Additionally, inter-molecular bond formation can occur between polydimethylsiloxane (PDMS) chains, again particularly at previously unreacted Si-H excess positions (via hydrolysis, oxidative or thermally induced reaction pathways), and thermal, oxidative, and thermo-oxidative rearrangements may occur within or between individual PDMS chains of the silicone elastomeric material. The occurrence of one or more of the above will cause an increase in crosslink density within the silicone elastomeric material and consequently a more rigid structure which prevents the silicone elastomeric material to return to its original thickness after compression.

Many silicone elastomeric materials have a substantial compression set e.g., of greater than 50% or even greater than 60% even after compression at temperatures of 125°C and 150°C for short periods of time e.g., 22 hours and can suffer from problems caused by a consequential change in shape and/or a significant increase in hardness during long-term service in high-temperature applications unless they undergo a post-cure heating process. "Post curing" is the most straightforward way to minimise compression set where hydrosilylation-cured silicone materials are subjected to a period of several hours e.g., four or more hours of post-cure heating at temperature of 150°C or greater. However, post-curing is not usually commercially desired or indeed viable given increasing energy consumption and delays in manufacture time.

Many applications described above typically desire silicone elastomeric materials having a compression set value which is as low a s possible e.g., no greater than 40%, across a wide spectrum of temperatures.

In the United States electrical connector systems have to meet the requirements of the SAE International USCAR-2 "Performance Specification for Automotive Electrical Connector Systems" testing regime. Sealed connector assemblies are graded for their suitability for use over specified temperature ranges fulfilling a class of relevant automotive specifications for given temperature ranges. Currently there are five ranges identified as T1 - T5:
T1 is for the temperature class -40° C to +85°C;
T2 is for the temperature range -40° C to +100°C;
T3 is for the temperature range -40° C to +125°C;
T4 is for the temperature range -40° C to +150°C; and currently the highest grade is
T5 for the -40° C to 175 °C.

Current sealed connector assemblies are fulfilling the T3 temperature class. However, vehicle manufacturers are developing vehicles necessitating the need to withstand increased temperatures in vehicle engines and their surrounds due to, for example, better encapsulation, higher engine efficiency and turbocharger use etc. Hence, increasingly electrical connectors made from silicone rubber need to function at higher temperatures in order to meet T4 and T5 requirements.

Given it is not desirable to be forced to post cure every elastomer after cure, a variety of additives have been proposed for the reduction of compression set without the need for post-cuing.

In US5153244 compression set values of hydrosilylation cured silicone were substantially reduced by the introduction into said compositions of a phthalocyanine compound or a metal derivative of such a compound, where the metal was copper, nickel, cobalt or iron.

US8080598B2 proposed a hydrosilylation cured silicone rubber having low compression set without post curing using a diacyl-hydrazide-based compound such as dodecanedioyl-di-(N'-salicyloyl)hydrazine, a synonym for which is 1-N',12-N'-bis(2-hydroxybenzoyl)dodecanedihydrazide, as well as several alternatives, in combination with a cure inhibitor selected from an acetylene-containing silane, a vinyl-containing low-molecular- weight organosiloxane compound, or an alcohol derivative having carbon-carbon triple bonds to reduce compression set. The introduction of US8080598B2 stated that "articles molded from an organopolysiloxane rubber composition curable by an addition reaction and compounded with a phthalocyanine compound have limited practical application because of coloration caused by the phthalocyanine". Despite the teaching in US8080598B2, US9289963B2, US9598575B2 and US10000680B2 reverted back to the use of a phthalocyanine compound as a compression set additive.

However, most of the previous compression set additives utilised, such as the above are suited for improving compression set after compression for at least 22 hours at up to the upper limit of T5 (+175°C) and most current silicone elastomers made from LSRs mainly only fulfill Classes T3 (maximum 125°C) or T4 (maximum 150°C) requirements with compression set of less than or equal to (≤) 50% after compression over 1008h at the respective temperature. Hence, they are not able to act sufficiently well to reduce compression set for newer target performances with permanent test temperatures of 175°C (T5) which are increasingly being considered /proposed due to the ever-increasing demands of the automotive industry and others.

US 2020/270500 relates to a thermally conductive silicone gel composition that has high thermal conductivity, that is less likely to run or drip when applied to an inclined surface or in a vertical direction in an uncured state, and that has excellent gap-filling ability and repairability with respect to heat-dissipating components; and to a thermally conductive member composed of this composition, and a heat-dissipating structure using this member.

US 2021/040322 relates to curable silicone rubber composition which can be cured to silicone rubber composition having low compression set and the use of such a curable silicone rubber composition.

US 5 989 719 relates to a curable liquid silicone rubber composition with high resistance against engine oils, and gaskets made from the composition.

WO 2023/087233 relates to hydrosilylation (addition) curable heat stabilised silicone rubber compositions, silicone rubber elastomers made upon the cure of said compositions and their applications and uses.

There is provided herein a hydrosilylation curable silicone rubber composition, which comprises the following components:
a) one or more polyorganosiloxanes containing at least two unsaturated groups, selected from alkenyl groups and alkynyl groups, per molecule and having a viscosity in a range of from 1000 mPa.s to 100,000 mPa.s at 25°C;
b) an organosilicon compound having at least two, alternatively at least three Si-H groups per molecule;
c) a silica reinforcing filler which is optionally hydrophobically treated;
d) a hydrosilylation catalyst comprising or consisting of a platinum group metal or a compound thereof;
e) a phthalocyanine compound or a metal derivative of such a compound, where the metal is copper, nickel, cobalt, iron, manganese, chromium, zinc, platinum, palladium, and vanadium and which is present in an amount of from 0.02 wt. % to 2.5 wt. % of the composition;
f) cyanuric acid, biuret or a mixture thereof in an amount of from 0.005 to 0.2 wt. % of the composition; and
g) one or more of magnesium hydroxide, magnesium carbonate, magnesium hydroxy carbonate or manganese carbonate in an amount 0.25 to 2.0 wt. % of the composition;
wherein the total wt. % of the composition is 100 wt. %.

There is also provided a silicone elastomeric material which is the cured product of the above hydrosilylation curable silicone rubber composition, which silicone elastomeric material has a compression set of no more than 15%, preferably no more than 10% when measured in accordance with industrial standard norm ISO 815-1 method A after compression at 175°C for 22 hours and a compression set of no more than 20%, preferably no more than 15% when measured in accordance with industrial standard norm ISO 815-1 method A after compression at 200°C for 22 hours; alternatively having a compression set of 30 % or less, preferably 25 % or less, when measured in accordance with industrial standard norm ISO 815-1 method A after compression at 175°C for 168 hours and a compression set of 40 % or less, preferably 35 % or less, when measured in accordance with industrial standard norm ISO 815-1 method A after compression at 200°C for 168 hours (one week).

There is also provided a process for making a silicone elastomeric material comprising the steps of mixing:
a) one or more polyorganosiloxanes containing at least two unsaturated groups, selected from alkenyl groups and alkynyl groups, per molecule and having a viscosity in a range of from 1000 mPa.s to 100,000 mPa.s at 25°C;
b) an organosilicon compound having at least two, alternatively at least three Si-H groups per molecule;
c) a silica reinforcing filler which is optionally hydrophobically treated;
d) a hydrosilylation catalyst comprising or consisting of a platinum group metal or a compound thereof;
e) a phthalocyanine compound or a metal derivative of such a compound, where the metal is copper, nickel, cobalt, iron, manganese, chromium, zinc, platinum, palladium, and vanadium and which is present in an amount of from 0.02 wt. % to 2.5 wt. % of the composition;
f) cyanuric acid, biuret or a mixture thereof in an amount of from 0.005 to 0.2 wt. % of the composition; and
g) one or more of magnesium hydroxide, magnesium carbonate, magnesium hydroxy carbonate or manganese carbonate in an amount 0.25 to 2.0 wt. % of the composition;
and curing the composition at a temperature of from 80°C to 200°C.

There is also provided a silicone elastomeric material obtained or obtainable from a process comprising the steps of mixing a:
a) one or more polyorganosiloxanes containing at least two unsaturated groups, selected from alkenyl groups and alkynyl groups, per molecule and having a viscosity in a range of from 1000 mPa.s to 100,000 mPa.s at 25°C;
b) an organosilicon compound having at least two, alternatively at least three Si-H groups per molecule;
c) a silica reinforcing filler which is optionally hydrophobically treated;
d) a hydrosilylation catalyst comprising or consisting of a platinum group metal or a compound thereof;
e) a phthalocyanine compound or a metal derivative of such a compound, where the metal is copper, nickel, cobalt, iron, manganese, chromium, zinc, platinum, palladium, and vanadium and which is present in an amount of from 0.02 wt. % to 2.5 wt. % of the composition;
f) cyanuric acid, biuret or a mixture thereof in an amount of from 0.005 to 0.2 wt. % of the composition; and
g) one or more of magnesium hydroxide, magnesium carbonate, magnesium hydroxy carbonate or manganese carbonate in an amount 0.25 to 2.0 wt. % of the composition;

wherein the total wt. % of the composition is 100 wt. %;
and curing the composition at a temperature of from 80°C to 200°C;
which silicone elastomeric material has a compression set of no more than 20% after 22 hours compression at temperatures up to 190°C, alternatively up to 200°C, when measured in accordance with industrial standard norm ISO 815-1:2019 method A.

There is also provided the use of a combination of components (e) (f) and (g) wherein
e) is a phthalocyanine compound or a metal derivative of such a compound, where the metal is copper, nickel, cobalt, iron, manganese, chromium, zinc, platinum, palladium, and vanadium;
f) is cyanuric acid, biuret or a mixture thereof in an amount of from 0.005 to 0.2 wt. % of the composition; and
g) is one or more of magnesium hydroxide, magnesium carbonate, magnesium hydroxy carbonate or manganese carbonate in an amount 0.25 to 2.0 wt. % of the composition;
as a means of reducing the compression set in a silicone elastomeric material which is the cured product of a hydrosilylation curable silicone rubber composition, which otherwise comprises the following components:
a) one or more polyorganosiloxanes containing at least two unsaturated groups, selected from alkenyl groups and alkynyl groups, per molecule and having a viscosity in a range of from 1000 mPa.s to 100,000 mPa.s at 25°C;
b) an organosilicon compound having at least two, alternatively at least three Si-H groups per molecule;
c) a silica reinforcing filler which is optionally hydrophobically treated;
d) a hydrosilylation catalyst comprising or consisting of a platinum group metal or a compound thereof;
wherein the total wt. % of the composition is 100 wt. %.

It was found that compositions as described herein containing components (e) (f) and (g) provided a silicone elastomer with a consistently improved (lower) compression across a broad temperature range of from 100°C to about 190°C alternatively 200°C or even 225°C compared to two of the most preferred commercially used compression set additives, namely the aforementioned dodecanedioyl-di-(N'-salicyloyl)hydrazine, a synonym for which is 1-N',12-N'-bis(2-hydroxybenzoyl)dodecanedihydrazide, and 3- (n-Salicyloyl)Amino-1,2,4-Triazole, a synonym for which is 2-Hydroxy-N-1H-1,2,4-triazol-3-ylbenzamide.

The components of the composition are hereafter described in further detail.

### Component (a)

Component (a) of the composition is one or more polyorganosiloxanes containing at least two unsaturated groups, selected from alkenyl groups and alkynyl groups, per molecule and having a viscosity in a range of from 1000 mPa.s to 100,000 mPa.s at 25°C.

Component (a) is a polyorganosiloxane, such as a polydiorganosiloxane having at least two unsaturated groups per molecule, which unsaturated groups are selected from alkenyl or alkynyl groups. Alternatively, component (a) has at least three unsaturated groups per molecule.

The unsaturated groups of component (a) may be terminal, pendent, or in both locations.

Alkenyl groups may have 2 to 30, alternatively 2 to 24, alternatively 2 to 20, alternatively 2 to 12, alternatively 2 to 10, and alternatively 2 to 6 carbon atoms. Possible alkenyl groups are exemplified by, but not limited to, vinyl, allyl, methallyl, propenyl, and hexenyl and cyclohexenyl groups. Alkynyl groups may have 2 to 30, alternatively 2 to 24, alternatively 2 to 20, alternatively 2 to 12, alternatively 2 to 10, and alternatively 2 to 6 carbon atoms. Alkynyl groups may be exemplified by, but not limited to, ethynyl, propynyl, and butynyl groups.

Component (a) has multiple units of the formula (I): R'ₐSiO_{(4-a)/2} (I)
in which each R' is independently selected from an aliphatic hydrocarbyl, or aliphatic non-halogenated organyl group (that is any aliphatic organic substituent group, regardless of functional type, having one free valence at a carbon atom). Saturated aliphatic hydrocarbyls are exemplified by, but not limited to alkyl groups such as methyl, ethyl, propyl, pentyl, octyl, undecyl, and octadecyl and cycloalkyl groups such as cyclohexyl. Unsaturated aliphatic hydrocarbyls are exemplified by, but not limited to the alkenyl groups and alkynyl groups described above. The aliphatic non-halogenated organyl groups are exemplified by, but not limited to, suitable nitrogen containing groups such as amido groups, imido groups; oxygen containing groups such as polyoxyalkylene groups, carbonyl groups, alkoxy groups and hydroxyl groups. The subscript "a" is 0, 1, 2 or 3, typically in this instance a is mainly 2 but may contain some units where a is 1 or 3. Siloxy units may be described by a shorthand (abbreviated) nomenclature, namely - "M," "D," "T," and "Q", when R' is as described above, alternatively an alkyl group, typically a methyl group The M unit corresponds to a siloxy unit where a = 3, that is R'₃SiO_{1/2}; the D unit corresponds to a siloxy unit where a = 2, namely R'₂SiO_{2/2}; the T unit corresponds to a siloxy unit where a = 1, namely R'₁SiO_{3/2}; the Q unit corresponds to a siloxy unit where a = 0, namely SiO_{4/2}. The polyorganosiloxane, such as a polydiorganosiloxane of component (a), is substantially linear but may contain a proportion of branching due to the presence of T units (as previously described) within the molecule, hence the average value of subscript a in structure (I) is about 2.

Examples of typical R' groups on component (a) the one or more polyorganosiloxanes containing at least two unsaturated groups, selected from alkenyl groups and alkynyl groups, per molecule, include mainly alkyl groups, especially methyl and ethyl, alternatively methyl groups but may also include aryl groups and/or fluoroalkyl groups such as trifluoropropyl or perfluoroalkyl groups in addition to the required at least two unsaturated groups selected from alkenyl and/or alkynyl groups, typically alkenyl groups The groups may be in pendent position (on a D or T siloxy unit) or may be terminal (on an M siloxy unit).

Hence, the polymer chain of component (a) may be selected from polydimethylsiloxanes, alkylmethylpolysiloxanes, alkylarylpolysiloxanes or copolymers thereof (where reference to alkyl means any suitable alkyl group, alternatively an alkyl group having two or more carbons) providing each component (a) polymer comprises at least two alkenyl and or alkynyl groups, typically at least two alkenyl groups. Such polymer chains may have any suitable terminal groups, for example, they may be trialkyl terminated, alkenyldialkyl terminated alkynyldialkyl terminated or may be terminated with any other suitable terminal group combination providing each polymer contains at least two unsaturated groups selected from alkenyl and alkynyl groups per molecule. In one embodiment the terminal groups of such a polymer don't comprise any silanol terminal groups. Hence component (a) may, for the sake of example, be:
a dialkylalkenyl terminated polydimethylsiloxane, e.g., dimethylvinyl terminated polydimethylsiloxane; a dialkylalkenyl terminated dimethylmethylphenylsiloxane, e.g., dimethylvinyl terminated dimethylmethylphenylsiloxane; a trialkyl terminated dimethylmethylvinyl polysiloxane; a dialkylvinyl terminated dimethylmethylvinyl polysiloxane copolymer; a dialkylvinyl terminated methylphenylpolysiloxane, a dialkylalkenyl terminated methylvinylmethylphenylsiloxane; a dialkylalkenyl terminated methylvinyldiphenylsiloxane; a dialkylalkenyl terminated methylvinyl methylphenyl dimethylsiloxane; a trimethyl terminated methylvinyl methylphenylsiloxane; a trimethyl terminated methylvinyl diphenylsiloxane; or a trimethyl terminated methylvinyl methylphenyl dimethylsiloxane.

Component a) has a viscosity of from 1000 mPa.s to 100,000 mPa.s at 25°C, alternatively 5000 mPa.s to 75,000 mPa.s at 25°C, 10,000 mPa.s to 60,000 mPa.s at 25°C and is preferably present in an amount of from 25 to 60 wt. % of the composition, alternatively in an amount of from 30 to 60 wt. % of the composition, alternatively in an amount of from 35 to 55 wt. % of the composition. Viscosity may be measured at 25 °C using either a Brookfield^{™} rotational viscometer with spindle LV-4 for viscosities over 15,000mPa.s (Spindle LV-4 designed for viscosities in the range between 1,000-2,000,000 mPa.s) at an appropriate rpm and using a Brookfield^{™} rotational viscometer with a cone plate arrangement with cone CP-52 for viscosities up to 15, 000mPa.s at 25°C and an appropriate rpm.

### Component (b)

Component (b) functions as a cross-linker and is provided in the form of an organosilicon compound having at least two, alternatively at least three Si-H groups per molecule. Component (b) normally contains three or more silicon-bonded hydrogen atoms so that the hydrogen atoms can react with the unsaturated alkenyl and/or alkynyl groups of component (a) to form a network structure therewith and thereby cure the composition. Some or all of Component (b) may alternatively have two silicon bonded hydrogen atoms per molecule when polymer (a) has greater than two unsaturated groups per molecule.

The molecular configuration of the organosilicon compound having at least two, alternatively at least three Si-H groups per molecule (b) is not specifically restricted. It may be a polyorganosiloxane which can have a straight chain, be branched (a straight chain with some branching through the presence of T groups), cyclic or be a silicone resin based.

While the molecular weight of component (b) is not specifically restricted, the viscosity is typically from 5 to 50,000 mPa.s at 25°C using the test methodology as described for component (a). Silicon-bonded organic groups used in component (b) may be exemplified by alkyl groups such as methyl, ethyl, propyl, n-butyl, t-butyl, pentyl, hexyl; aryl groups such as phenyl tolyl, xylyl, or similar aryl groups; 3-chloropropyl, 3,3,3-trifluoropropyl, or similar halogenated alkyl group, preferred alkyl groups having from 1 to 6 carbons, especially methyl ethyl or propyl groups or phenyl groups. Preferably the silicon-bonded organic groups used in component (b) are alkyl groups, alternatively methyl, ethyl or propyl groups.

Examples of the organosilicon compound having at least two, alternatively at least three Si-H groups per molecule (b) include but are not limited to:
(a') trimethylsiloxy-terminated methylhydrogenpolysiloxane,
(b') trimethylsiloxy-terminated polydimethylsiloxane-methylhydrogensiloxane,
(c') dimethylhydrogensiloxy-terminated dimethylsiloxane-methylhydrogensiloxane copolymers,
(d') dimethylsiloxane-methylhydrogensiloxane cyclic copolymers,
(e') copolymers and/or silicon resins consisting of (CH₃)₂HSiO_{1/2} units, (CH₃)₃SiO_{1/2} units and SiO_{4/2} units,
(f') copolymers and/or silicone resins consisting of (CH₃)₂HSiO_{1/2} units and SiO_{4/2} units,
(g') Methylhydrogensiloxane cyclic homopolymers having between 3 and 10 silicon atoms per molecule;
alternatively, component (b), the cross-linker, may be a filler, e.g., silica treated with one of the above, and mixtures thereof.

In one embodiment the Component (b) is selected from a methylhydrogenpolysiloxane capped at both molecular terminals with trimethylsiloxy groups; a copolymer of a methylhydrogensiloxane and a dimethylsiloxane capped at both molecular terminals with trimethylsiloxy groups; dimethylsiloxane capped at both molecular terminals with dimethylhydrogensiloxy groups; a copolymer of a methylhydrogensiloxane and a dimethylsiloxane capped at both molecular terminals with dimethylhydrogensiloxy groups.

The cross-linker (b) is generally present in the hydrosilylation curable silicone rubber composition such that the molar ratio of the total number of the silicon-bonded hydrogen atoms in component (b) to the total number of alkenyl and/or alkynyl groups in component (a) is from 0.5 : 1.0 to 10.0 : 1.0. When this ratio is less than 0.5:1, a well-cured composition will not be obtained. When the ratio exceeds 10:1, there is a tendency for the hardness of the cured composition to increase when heated. Preferably component (b) is in an amount such that the molar ratio of silicon-bonded hydrogen atoms of component (b) to alkenyl/alkynyl groups, alternatively alkenyl groups of component (a) ranges from 0.7 : 1.0 to 5.0 : 1.0, alternatively from 0.9 : 1.0 to 2.5 : 1.0, and further alternatively from 0.9 : 1.0 to 2.0 : 1.0.

The silicon-bonded hydrogen (Si-H) content of component (b) is determined using quantitative infra-red analysis in accordance with ASTM E168. In the present instance the silicon-bonded hydrogen to alkenyl (vinyl) and/or alkynyl ratio is important when relying on a hydrosilylation cure process. Generally, this is determined by calculating the total weight % of alkenyl groups in the composition, e.g., vinyl [V] and the total weight % of silicon bonded hydrogen [H] in the composition and given the molecular weight of hydrogen is 1 and of vinyl is 27 the molar ratio of silicon bonded hydrogen to vinyl is 27[H]/[V].

Typically, dependent on the number of unsaturated groups in component (a) as well as the number of Si-H groups in component (b), component (b) will be present in an amount of from 0.1 to 10 wt. % of the hydrosilylation curable silicone rubber composition, alternatively 0.1 to 7.5wt. % of the hydrosilylation curable silicone rubber composition, alternatively 0.5 to 7.5wt. %, further alternatively from 0.5% to 5 wt. % of the hydrosilylation curable silicone rubber composition.

### Component (c)

Component (c) is a silica reinforcing filler which is optionally hydrophobically treated; The reinforcing fillers of component (c) may be exemplified by fumed silica and/or a precipitated silica and/or a colloidal silica. In one alternative, the fumed silica, precipitated silica and/or colloidal silica are provided in a finely divided form.

Precipitated silica, fumed silica and/or colloidal silicas are particularly preferred because of their relatively high surface area, especially when provided in a finely divided form, which is typically at least 50 m²/g (BET method in accordance with ISO 9277: 2010). Fillers having surface areas of from 50 to 450 m²/g (BET method in accordance with ISO 9277: 2010), alternatively of from 50 to 300 m²/g (BET method in accordance with ISO 9277: 2010), are typically used. All these types of silica are commercially available.

When silica reinforcing filler (c) is naturally hydrophilic (e.g., untreated silica fillers), it is typically treated with a treating agent to render it hydrophobic. These surface modified silica reinforcing fillers (c) do not clump and can be homogeneously incorporated into polydiorganosiloxane polymer (a), described below, as the surface treatment makes the fillers easily wetted by component (a). Typically, silica reinforcing filler (c) may be surface treated with any low molecular weight organosilicon compounds disclosed in the art applicable to prevent creping of liquid silicone rubber (LSR) compositions during processing. For example, organosilanes, polydiorganosiloxanes, or organosilazanes e.g., hexaalkyl disilazane, short chain siloxane diols to render the silica reinforcing filler (c) (s) hydrophobic and therefore easier to handle and obtain a homogeneous mixture with the other ingredients. Specific examples include, but are not restricted to, silanol terminated trifluoropropylmethylsiloxane, silanol terminated vinyl methyl (ViMe) siloxane, silanol terminated methyl phenyl (MePh) siloxane, liquid hydroxyldimethyl-terminated polydiorganosiloxane containing an average from 2 to 20 repeating units of diorganosiloxane in each molecule, hydroxyldimethyl terminated Phenylmethyl Siloxane, hexaorganodisiloxanes, such as hexamethyldisiloxane, divinyltetramethyldisiloxane; hexaorganodisilazanes, such as hexamethyldisilazane (HMDZ), divinyltetramethyldisilazane and tetramethyldi(trifluoropropyl)disilazane; hydroxyldimethyl terminated polydimethylmethylvinyl siloxane, octamethyl cyclotetrasiloxane, and silanes including but not limited to methyltrimethoxysilane, dimethyldimethoxysilane, vinyltrimethoxysilane, methyltriethoxysilane, vinyltriethoxysilane, chlorotrimethyl silane, dichlorodimethyl silane, trichloromethyl silane.

In one embodiment, the treating agent may be selected from silanol terminated vinyl methyl (ViMe) siloxane, liquid hydroxyldimethyl-terminated polydiorganosiloxane containing an average from 2 to 20 repeating units of diorganosiloxane in each molecule, hexaorganodisiloxanes, such as hexamethyldisiloxane, divinyltetramethyldisiloxane; hexaorganodisilazanes, such as hexamethyldisilazane (HMDZ), divinyltetramethyldisilazane and; hydroxyldimethyl terminated polydimethylmethylvinyl siloxane, octamethyl cyclotetrasiloxane, and silanes including but not limited to methyltriethoxysilane, dimethyldiethoxysilane and/or vinyltriethoxysilane. A small amount of water can be added together with the silica treating agent(s) as processing aid.

The surface treatment of untreated silica reinforcing filler (c) may be undertaken prior to introduction in the composition or in situ (i.e., in the presence of at least a portion of the other ingredients of the composition herein by blending these ingredients together at room temperature or above until the filler is completely treated. Typically, untreated silica reinforcing filler (c) is treated in situ with a treating agent in the presence of component (a) which results in the preparation of a silicone rubber base material which can subsequently be mixed with other ingredients.

Silica reinforcing filler (c) is optionally present in an amount of up to 40 wt. % of the composition, alternatively from 1.0 to 40wt. % of the composition, alternatively of from 5.0 to 35wt. % of the composition, alternatively of from 10.0 to 35wt. % of the composition.

### Component (d)

Component (d) of the composition is a hydrosilylation catalyst comprising or consisting of a platinum group metal or a compound thereof. These are usually selected from catalysts of the platinum group of metals (platinum, ruthenium, osmium, rhodium, iridium and palladium), or a compound of one or more of such metals. Alternatively, platinum and rhodium compounds are preferred due to the high activity level of these catalysts in hydrosilylation reactions, with platinum compounds most preferred. In a hydrosilylation (or addition) reaction a hydrosilylation catalyst such as component (d) herein catalyses the reaction between an unsaturated group, usually an alkenyl group e.g., vinyl with Si-H groups.

The catalyst (d) can be a platinum group metal, a platinum group metal deposited on a carrier, such as activated carbon, metal oxides, such as aluminum oxide or silicon dioxide, silica gel or powdered charcoal, or a compound or complex of a platinum group metal. Preferably the platinum group metal is platinum.

Examples of preferred hydrosilylation catalysts (d) are platinum based catalysts, for example, platinum black, platinum oxide (Adams catalyst), platinum on various solid supports, chloroplatinic acids, e.g., hexachloroplatinic acid (Pt oxidation state IV) (Speier catalyst), chloroplatinic acid in solutions of alcohols e.g., isooctanol or amyl alcohol (Lamoreaux catalyst), and complexes of chloroplatinic acid with ethylenically unsaturated compounds such as olefins and organosiloxanes containing ethylenically unsaturated silicon-bonded hydrocarbon groups, e.g., tetra-vinyl-tetramethylcyclotetrasiloxane-platinum complex (Ashby catalyst). Soluble platinum compounds that can be used include, for example, the platinum-olefin complexes of the formulae (PtCl₂.(olefin)₂ and H(PtCl₃.olefin), preference being given in this context to the use of alkenes having 2 to 8 carbon atoms, such as ethylene, propylene, isomers of butene and of octene, or cycloalkanes having 5 to 7 carbon atoms, such as cyclopentene, cyclohexene, and cycloheptene. Other soluble platinum catalysts are, for the sake of example a platinum-cyclopropane complex of the formula (PtCl₂C₃H₆)₂, the reaction products of hexachloroplatinic acid with alcohols, ethers, and aldehydes or mixtures thereof, or the reaction product of hexachloroplatinic acid and/or its conversion products with vinyl-containing siloxanes such as methylvinylcyclotetrasiloxane in the presence of sodium bicarbonate in ethanolic solution -. Platinum catalysts with phosphorus and amine ligands can be used as well, e.g., (Ph₃P)₂PtCl₂; and complexes of platinum with vinylsiloxanes, such as symdivinyltetramethyldisiloxane.

Hence, specific examples of suitable platinum-based catalysts include
(i) complexes of chloroplatinic acid with organosiloxanes containing ethylenically unsaturated hydrocarbon groups are described in US 3,419,593;
(ii) chloroplatinic acid, either in hexahydrate form or anhydrous form;
(iii) a platinum-containing catalyst which is obtained by a method comprising reacting chloroplatinic acid with an aliphatically unsaturated organosilicon compound, such as divinyltetramethyldisiloxane;
(iv) alkene-platinum-silyl complexes as described in US Pat. No. 6,605,734 such as (COD)Pt(SiMeCl₂)₂ where "COD" is 1,5-cyclooctadiene; and/or
(v) Karstedt's catalyst, a platinum divinyl tetramethyl disiloxane complex typically containing about 1 wt. % of platinum typically in a vinyl siloxane polymer with a viscosity of from about 200 to 750 mPa.s using the test methodology as described for component (a).

Solvents such as toluene and the like organic solvents have been used historically as alternatives but the use of vinyl siloxane polymers by far the preferred choice. These are described in US3,715,334 and US3,814,730. In one preferred embodiment component (d) may be selected from co-ordination compounds of platinum. In one embodiment hexachloroplatinic acid and its conversion products with vinyl-containing siloxanes, Karstedt's catalysts and Speier catalysts are preferred.

Component (d) is typically present in a quantity of platinum atom that provides from 0.1 to 500ppm (parts per million) with respect to the weight of the reactive ingredients, components (a) and (b). The catalyst may be added as a single species or as a mixture of two or more different species. Typically, dependent on the form/concentration in which the catalyst is provided the amount of catalyst present will be within the range of from 0.05-1.5 wt. % of the composition, alternatively from 0.05-1.0 wt. %, alternatively from 0.1-1.0 wt. %, alternatively 0.1 to 0.5 wt. %, of the composition, wherein the platinum catalyst is provided in a masterbatch of polymer such as (a) described above.

### Component (e)

Component (e) of the hydrosilylation curable silicone rubber composition is a phthalocyanine compound or a metal derivative of such a compound, where the metal is copper, nickel, cobalt, iron, manganese, chromium, zinc, platinum, palladium or vanadium, for example the phthalocyanine compound may have the following structure:

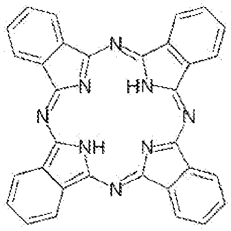

A metal phthalocyanine e.g., copper phthalocyanine is depicted below

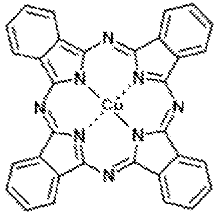

In one embodiment component (e) comprises or consists of copper phthalocyanine Any suitable form of copper phthalocyanine may be utilised e.g., the pigment 15:3 or 15:4 beta version of copper phthalocyanine , the 15.2 alpha form of copper phthalocyanine may also be used. The 15:1 alpha form of copper phthalocyanine is suitable when sufficiently stable. with the 15:3 or 15:4 beta version of copper phthalocyanine particularly preferred. Component (e) the phthalocyanine compound or a metal derivative of such a compound is present in an amount of from 0.02 wt. % to 2.5 wt. % of the composition, alternatively of from 0.1 wt. % to 2.5 wt. % of the composition, alternatively of from 0.2 wt. % to 2.0 wt. % of the composition.

It is to be noted however that it may be delivered on its own or in a masterbatch or mixture with for example a suitable polydimethylsiloxane, e.g., a dimethylvinyl terminated polydimethylsiloxane having a viscosity of from 1000mPa.s at 25°C to 25,000mPa.s at 25°C. For, example copper phthalocyanine in a dimethylvinyl terminated polydimethylsiloxane having a viscosity of from 1,000 mPa.s at 25°C to 15,000 mPa.s at 25°C, in a mixture containing from 10 to 50% by weight of copper phthalocyanine and the remainder being made up of dimethylvinyl terminated polydimethylsiloxane having a viscosity of from 1,000 mPa.s at 25°C to 15,000 mPa.s at 25°C. Specific examples include 30 wt.% copper phthalocyanine in vinyldimethylsiloxy endcapped polydimethylsiloxane having a viscosity of about 9000mPa.s at 25°C (using a Brookfield^{™} rotational viscometer with a cone plate arrangement with cone CP-52 at 3rpm) and 15wt. % copper phthalocyanine in vinyldimethylsiloxy endcapped polydimethylsiloxane having a viscosity of about 2000mPa.s at 25°C (using a Brookfield^{™} rotational viscometer with a cone plate arrangement with cone CP-52 at 3rpm). In such a case when provided in such a masterbatch or mixture, the masterbatch or mixture may be introduced into the composition in an amount of 0.2 to 5 wt. % of the composition an such masterbatch or mixture may comprise from about 10 to 50 wt. % of component (e) with the remainder being the suitable polydimethylsiloxane.

### Component (f)

Component f) is cyanuric acid, biuret or a mixture thereof.

### For the avoidance of doubt:

Cyanuric acid exists in a tautomeric equilibrium of 1,3,5-triazine-2,4,6-triol, (structure 1 below) and its tri-keto tautomer 1,3,5-Triazinane-2,4,6-trione (structure 2 below). It is to be understood that reference to cyanuric acid herein is to be considered to cover both tautomers.

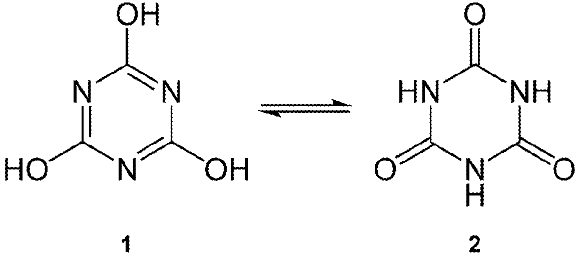

Biuret is a compound of the following structure:

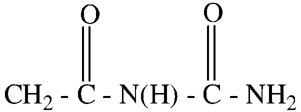

It has several alternative names such as 2-imidodicarbonic diamide and carbamylurea but will be referred to herein as biuret.

Cyanuric acid, biuret or a mixture thereof is present in the composition herein in an amount of from 0.005 to 0.2 wt. % of the composition and is widely commercially available.

### Component (g)

Component (g) is one or more of magnesium hydroxide, a magnesium carbonate, a magnesium hydroxy carbonate or manganese carbonate. Magnesium carbonates and magnesium hydroxycarbonates are particularly preferred.

These may include one or more Magnesium carbonates selected from magnesite (MgCO₃), barringtonite (MgCO₃.2H₂O), nesquihonite (MgCO₃.3H₂O), lansfordite (MgCO₃.5H₂O); and one or more magnesium hydroxy carbonates such as pokrovskite (Mg₂(CO₃)(OH)₂.0.5H₂O), artinite (Mg₂(CO₃)(OH)₂.3H₂O), hydromagnesite (Mg₅(CO₃)₄(OH)₂.4H₂O) which is sometimes referred to as light magnesium carbonate, dypingite (Mg₅(CO₃)₄(OH)₂.5H₂O) which is sometimes referred to as heavy magnesium carbonate, giorgiosite (Mg₅(CO₃)₄(OH)₂.5-6H₂O) and shelkovite (Mg₇(CO₃)₅(OH)₄.24H₂O). Component (f) is present in the composition in an amount of from 0.25 to 5.0 wt. % of the composition, alternatively from 0.25 to 4.0 wt. % of the composition, alternatively from 0.25 to 3.0 wt. % of the composition, alternatively from 0.25 to 2.0 wt. % of the composition.

### Optional Additives

Such hydrosilylation curable silicone rubber compositions may also comprise one or more optional additives depending on the intended use. Examples include cure inhibitors, mold releasing agents, adhesion catalysts, peroxides, electrically conductive fillers, thermally conductive fillers, pot life extenders, lubricants, heat stabilisers, metal deactivators, UV light stabilizers, bactericides, wetting agents and the like.

### Cure Inhibitors

Cure inhibitors are used, when required, to prevent or delay the addition-reaction curing process especially during storage. The optional addition-reaction inhibitors of platinum-based catalysts are well known in the art and include hydrazines, triazoles, phosphines, mercaptans, organic nitrogen compounds, acetylenic alcohols, silylated acetylenic alcohols, maleates, fumarates, ethylenically or aromatically unsaturated amides, ethylenically unsaturated isocyanates, olefinic siloxanes, unsaturated hydrocarbon monoesters and diesters, conjugated ene-ynes, hydroperoxides, nitriles, and diaziridines. Alkenyl-substituted siloxanes as described in US3989667 may be used, of which cyclic methylvinylsiloxanes are preferred.

One class of known hydrosilylation reaction inhibitors are the acetylenic compounds disclosed in US3445420. Acetylenic alcohols such as 2-methyl-3-butyn-2-ol constitute a preferred class of inhibitors that will suppress the activity of a platinum-containing catalyst at 25 °C. Compositions containing these inhibitors typically require heating at temperature of 70 °C or above to cure at a practical rate.

Examples of acetylenic alcohols and their derivatives include 1-ethynyl-1-cyclohexanol (ETCH), 2-methyl-3-butyn-2-ol, 3-butyn-1-ol, 3-butyn-2-ol, propargyl alcohol, 1-phenyl-2-propyn-1-ol, 3,5-dimethyl-1-hexyn-3-ol, 1-ethynylcyclopentanol, 3-methyl-1-penten-4-yn-3-ol, and mixtures thereof. Derivatives of acetylenic alcohol may include those compounds having at least one silicon atom. When present, inhibitor concentrations as low as 1 mole of inhibitor per mole of the metal of catalyst will in some instances impart satisfactory storage stability and cure rate. In other instances, inhibitor concentrations of up to 500 moles of inhibitor per mole of the metal of catalyst are required. The optimum concentration for a given inhibitor in a given composition is readily determined by routine experimentation. Dependent on the concentration and form in which the inhibitor selected is provided/available commercially, when present in the composition, the inhibitor is typically present in an amount of from 0.0125 to 10% by weight of the composition.

In one embodiment the inhibitor when present is selected from 1-ethynyl-1-cyclohexanol (ETCH) and/or 2-methyl-3-butyn-2-ol and is present in an amount of greater than zero to 0.1 % by weight of the composition.

### Mold release agent

Any suitable mold release agent may be utilised. It may, for example, be a hydroxydimethyl terminated polydimethylsiloxane having viscosity of approximately 21 mPa.s at 25°C measured using a Brookfield^{™} rotational viscometer with spindle LV-2 at 12rpm.

### Lubricants

Any suitable lubricants may be used. Examples of suitable lubricants silicone containing oils such as trimethylsilyl terminated phenylmethylsiloxane dimethylsiloxane copolymers having a viscosity of from 100mPa.s to 200mPa.s at 25°C using the viscosity test methodology as described for component (a) and mixtures or derivatives thereof.

In one alternative embodiment herein, the composition does not include a diacylhydrazide-based compound.

Hence, in one alternative, the present disclosure thus provides a silicone rubber composition, which comprises any suitable combination of the following components:
a) one or more polyorganosiloxanes containing at least two unsaturated groups, selected from alkenyl groups and alkynyl groups, per molecule and having a viscosity in a range of from 1000 mPa.s to 100,000 mPa.s at 25°C; alternatively 5000 mPa.s to 75,000 mPa.s at 25°C, 10,000 mPa.s to 60,000 mPa.s at 25°C, an is preferably present in an amount of from 25 to 60 wt. % of the composition, alternatively in an amount of from 30 to 60 wt. % of the composition, alternatively in an amount of from 35 to 55 wt. % of the composition. Viscosity may be measured at 25 °C using a Brookfield^{®} rotational viscometer with spindle LV-4 (designed for viscosities in the range between 1,000-2,000,000 mPa.s) and adapting the speed according to the polymer viscosity.
b) an organosilicon compound having at least two, alternatively at least three Si-H groups per molecule, which may be present in an amount of from 0.1 to 10 wt. % of the silicone rubber composition, alternatively 0.1 to 7.5wt. % of the silicone rubber composition, alternatively 0.5 to 7.5wt. %, further alternatively from 0.5% to 5 wt. % of the composition;
c) a silica reinforcing filler which is preferably in a finely divided form and is optionally hydrophobically treated; high surface area, which is typically at least 50 m²/g (BET method in accordance with ISO 9277: 2010). Fillers having surface areas of from 50 to 450 m²/g (BET method in accordance with ISO 9277: 2010), alternatively of from 50 to 300 m²/g (BET method in accordance with ISO 9277: 2010), and are typically present in an amount of up to 40 wt. % of the composition, alternatively from 1.0 to 40wt. % of the composition, alternatively of from 5.0 to 35wt. % of the composition, alternatively of from 10.0 to 35wt. % of the composition;
d) a hydrosilylation catalyst comprising or consisting of a platinum group metal or a compound thereof; in an amount dependent on the form/concentration in which the catalyst is provided, within the range of from 0.001 to 3.0 wt. % of the composition, alternatively from 0.001 to 1.5 wt. % of the composition, alternatively from 0.01-1.5 wt. %, alternatively 0.01 to 0.1.0 wt. %, of the silicone rubber composition,
e) a phthalocyanine compound or a metal derivative of such a compound, where the metal is copper, nickel, cobalt, iron, manganese, chromium, zinc, platinum, palladium, and vanadium and which is present in an amount of from 0.02 wt. % to 2.5 wt. % of the composition;
f) cyanuric acid, biuret or a mixture thereof in an amount of from 0.005 to 0.2 wt. % of the composition; and
g) one or more of magnesium hydroxide, magnesium carbonate, magnesium hydroxy carbonate or manganese carbonate in an amount of from 0.25 to 5.0 wt. % of the composition, alternatively from 0.25 to 4.0 wt. % of the composition, alternatively from 0.25 to 3.0 wt. % of the composition, alternatively from 0.25 to 2.0 wt. % of the composition;
providing the total wt. % of the composition is 100 wt. %.

The composition may also contain one or more of the above optional additives in amounts indicated again providing the total wt. % of the composition is 100 wt. %.

The hydrosilylation curable silicone rubber compositions described above are usually stored before use in two or more parts. In the case of a two-part composition, the two parts are usually referred to as part (A) and part (B):
Part (A) typically contains the catalyst (d) in addition to polyorganosiloxane (a) and silica reinforcing filler (c), and
Part (B) usually includes cross-linker component (b), and when present optional inhibitor as well as remaining polyorganosiloxane (a) and/or the silica reinforcing filler (c).

It is important for the catalyst (d) to be stored separately from cross-linker (b) to prevent premature cure during storage.

Components (e), (f) and (g) may be stored in either part (A) or part (B) or in both parts providing they do not negatively affect the storage of any of the essential ingredients present in the respective part, including each other of said components (e), (f) and (g). Alternatively, if desired components (e), (f) and (g) may be added into the remaining composition i.e., to the combination of the part (A) and part (B) compositions during or after the part (A) composition and the part (B) compositions are mixed together prior to use.

Any optional additives, other than the inhibitor described above, may be incorporated into either part (A) or part (B) or in both parts providing they do not negatively affect the storage of any of the essential ingredients present in the respective part.

The compositions can be designed to be mixed in any suitable ratio e.g., part (A) : part (B) may be mixed together in ratios of from 10:1 to 1:10, alternatively from 5:1 to 1:5, alternatively from 2:1 to 1:2, but most preferred is a ratio of 1:1.

Ingredients/components in each of Part (A) and/or Part (B) may be mixed together individually in their respective part or may be introduced into the composition in pre-prepared in combinations for, e.g., ease of mixing the final composition. For Example, components (a) and (c) are often mixed together to form an LSR polymer base or masterbatch prior to introduction of other ingredients. These may then be mixed with the other ingredients of the Part being made directly or may be used to make pre-prepared concentrates commonly referred to in the industry as masterbatches.

In this instance, for ease of mixing ingredients, one or more masterbatches may be utilized to successfully mix the ingredients to form Part (A) and/or Part (B) compositions. For example, a "fumed silica" masterbatch may be prepared. This is effectively an LSR silicone rubber base with the silica reinforcing filler (c) treated in situ.

Parts A and B of the composition may be prepared by combining all of their respective components at ambient temperature. Any mixing techniques and devices described in the prior art can be used for this purpose. The particular device to be used will be determined by the viscosities of components and the final composition. A suitable mixer may include but are not limited to kneader mixer, a static mixer in a liquid injection molding machine, a Z-blade mixer, a two-roll mill (open mill), a three-roll mill, a Haake^{™} Rheomix OS Lab mixer, a screw extruder or a twin-screw extruder or the like. Speed mixers as sold by e.g., Hauschild and as DC 150.1 FV, DAC 400 FVZ or DAC 600 FVZ, may alternatively be used. Cooling of components during mixing may be desirable to avoid premature curing of the composition.

Prior to use the respective Part (A) and Part (B) compositions are mixed together in the desired ratio. Curing of the hydrosilylation curable silicone rubber composition on the substrate can, for example, take place in a mold to form a molded part, by injection molding, using e.g., a Liquid injection molding system (LIMS) press moulding, extrusion moulding, transfer moulding, press vulcanization, or calendaring. The compression set test pieces may be molded into suitable shapes e.g., a cylindrical disc of diameter 29.0 mm ± 0.5mm and thickness 12.5 mm ± 0.5mm and these were compressed by 25% to about 9.38 mm thickness. These may be prepared in molds or alternatively may be cut out of a pressed sheet of the silicone elastomeric material.

Under compression the LSR buttons (cured before at 175°C for 10 min) were kept between two metal plates in a convection oven for a suitable period of time, typically 22 hours at an elevated temperature before compression was released and the test pieces were allowed to recover to a thickness as close to the starting thickness allowing for the compression set to be determined.

The hydrosilylation curable silicone rubber composition is cured at any suitable temperature e.g., at a temperature of from 80°C to 200°C, alternatively from about 100°C to 180°C, alternatively from about 120°C to 180°C. As indicated above one of the standard ways of reducing compression set historically has been post curing with a view to reducing the number curable groups which might cure under compression during use as gaskets.

In the case of a process for the manufacture of a two-part silicone rubber composition as hereinbefore described the process may comprise the steps:
(i) preparation of a silicone base composition comprising components (a) polymer and (c) silica reinforcing filler,
(ii) dividing the resulting base into two parts, part (A) and part (B) and introducing the catalyst (d) into part (A) and the cross-linker (b) and inhibitor (if present) in the part (B) composition.
(iii) Introducing the other components any other optional additives into either or both part (A) and part (B); and
(iv) Storing the part (A) and part (B) compositions separately.

In an alternative process component (e) is not introduced into either component (A) or component (B) when separate but is introduced as part of the mixing process when the part (A) and part (B) compositions are mixed together prior to use e.g., during mixing prior to injection molding.

Typically, the part (A) and part (B) compositions are thoroughly mixed in a suitable weight ratio as described above, immediately before use in order to avoid premature cure. The curing stage cure is then undertaken.

If/when component (e) is introduced during the mixing process together with part (A) and part (B) typically the weight ratio of part (A) and part (B) will remain the same, e.g., if part (A) and part (B) are mixed in a 1 : 1 weight ratio there might be for example 49.5 wt. % of each of part (A) and part (B) and 1 wt. % component (e) mixed together before e.g., by molding.

The low compression set silicone elastomer compositions and methods herein are useful for applications such as acting as a barrier to prevent absorption or penetration of air, dust, noise, liquids, gaseous substances, or dirt. Silicone elastomeric materials with low compression set as described herein may be used in gasketing.

They are also utilised in a wide range of electrical and/or insulative applications. In the case of electrical applications, they may be useful in wiring/cabling/power supply and the like. For example, silicone elastomeric materials resulting from the compositions described herein may be utilised in a variety of applications e.g., as silicone coatings for standard non-silicone insulators, as cable coatings e.g., for safety cables and for cable accessories such as electrical connectors, terminations and wire seals. Electrical connectors are commonly used to create closed electrical circuits in automotive, residential, and infrastructural settings due to their excellent balance of mechanical properties, chemical and thermal stabilities, processing ease, and availability of self-lubricating formulations. They may be used to mate rigid thermoplastic housing components to provide both electrical and environmental isolation to the connector junctions from, for example, the potential presence of moisture, oils and fuels, and corrosive gases. The silicone elastomers made using the compositions herein have a suitably low compression set at high temperatures to provide mechanical integrity and dimensional stability electrical connectors etc. as described above to provide excellent sealing performance during service life.

Such electrical connectors, terminations and wire seals may be used in automotive applications for electric vehicle (EV) battery packs, EV battery, control units in EVs, e.g., in motor control unit (MCU) devices, lamp housings, fuse boxes, air filters, waterproof connectors, air conditioners, lighting devices, intercoolers and/ or electronic components. They may also be used in or for spark plugs e.g., in spark plugs boots for combustion engines.

Other applications include external waterproofing applications. Hence, they are used in the manufacture of automotive parts, such as cable accessories; electrical and electronic parts; packaging parts; construction parts such as sealants; household parts.

### EXAMPLES

All viscosities were measured at 25°C unless otherwise indicated. Viscosities of individual components in the following examples were measured using a Brookfield^{™} rotational viscometer with spindle LV-4 for viscosities over 15,000mPa.s (Spindle LV-4 designed for viscosities in the range between 1,000-2,000,000 mPa.s) at an appropriate rpm and using a Brookfield^{™} rotational viscometer with a cone plate arrangement with cone CP-52 for viscosities up to 15, 000mPa.s at an appropriate rpm unless otherwise indicated.

All compression set results were undertaken in accordance with industrial standard norm ISO 815-1:2019 method A in which a cylindrical disc of diameter 29.0 mm ± 0.5mm and thickness 12.5 mm ± 0.5mm was compressed by 25% to about 9.38 mm thickness. Under compression the LSR buttons (cured before at 175°C for 10 min) were kept between two metal plates in a convection oven for a suitable period of time, typically 22 hours at an elevated temperature before compression was released and the test pieces were allowed to recover to a thickness as close to the starting thickness allowing for the compression set to be determined.

A series of compositions were prepared using 2-part liquid silicone rubber elastomer compositions (Elas.) as depicted in Table 1 as the standard starting compositions:

**Table 1: 2-part liquid silicone rubber (LSR) elastomer compositions (Elas. 1)**

| Ingredients | Elas. 1 Part (A) | Elas. 1 Part (B) |
|---|---|---|
| Masterbatch 1 | 34.51 | 33.20 |
| Masterbatch 2 | 57.68 | 58.50 |
| Polymer 2 | 6.73 | 4.41 |
| Karstedt's catalyst | 0.35 | |
| Cross-linker 1 | | 3.20 |
| Mold Release Agent | 0.6 | 0.6 |
| cyclotetrasiloxane | 0.13 | |
| ethynyl cyclohexanol (ETCH) | | 0.09 |

For the avoidance of doubt, in the examples herein the composition was prepared with components (e) (f) and (g), in each case when present, added during or after the relevant part (A) composition and part (B) composition had been mixed together. Hence, where 0.1 wt. % of a compression set additive was introduced the final mixture cured was a combination of 49.95% part (A), as defined in Table 1 above, 49.95% part (B), as defined in Table 1 above together with 0.1 wt. % of the compression set additive.

In the above compositions:
**Masterbatch 1:** Masterbatch 1 contains:
   70.8 parts by weight of a dimethylvinylsiloxy terminated polydimethylsiloxane having a viscosity of about 53,000mPa.s at 25°C measured using a Brookfield^{™} rotational viscometer with spindle LV-4 at 6rpm, and
   22.4 parts by weight of a fumed silica filler having a surface area of approximately 300m²/g. The silica is hydrophobized and contains no vinyl functionalization;
**Masterbatch 2:** Masterbatch 2 contains:
   66.6 parts by weight of a dimethylvinylsiloxy terminated polydimethylsiloxane having a viscosity of about 55 Pa.s at 25°C measured using a Brookfield^{™} rotational viscometer with spindle LV-4 at 6rpm, and
   25.8 parts by weight of a fumed silica filler having a surface area of approximately 300m²/g. The silica is hydrophobized and has a vinyl functionalization of approximately 0.178 mmol/g.
   The parts by weight values given are not percentage values and therefore do not need to add to 100.
**Polymer 2:** polymer 2 is a vinyl terminal poly(dimethylsiloxane-co-methylvinylsiloxane) having a viscosity of 370 mPa.s at 25°C using a Brookfield^{™} rotational viscometer with a cone plate arrangement with cone CP-52 at 12rpm,
**Cross-linker 1:** Cross-linker 1 was a trimethyl terminated polymethylhydrogen dimethylsiloxane having a viscosity of 30mPa.s at 25°C using a Brookfield^{™} rotational viscometer with a cone plate arrangement with cone CP-52 at 12rpm,
**Mold release Agent:** The mold release agent was a hydroxydimethyl terminated polydimethylsiloxane having viscosity of approximately 21 mPa.s at 25°C measured using a Brookfield^{™} rotational viscometer with spindle LV-2 at 12rpm,
**Cyclotetrasiloxane:** The cyclotetrasiloxane was tetravinyl-tetramethyl-cyclotetrasiloxane
**CDA 6:** CDA 6 was dodecanedioyl-di-(N'-salicyloyl)hydrazine, a synonym for which is 1-N',12-N'-bis(2-hydroxybenzoyl)dodecanedihydrazide, which is sold commercially as ADK STAB^{™} CDA-6 from Adeka Corporation.

In use the part (A) and part (B) compositions were mixed together in a 1 : 1 weight ratio. The resulting composition was inserted into a suitable mold and cured as a button having a thickness of 12.5mm thickness and a diameter of 29mm at 175°C for a period of 10 minutes. Unless otherwise indicated, the resulting silicone rubber was not post-cured. Post-cured samples were post-cured for 4 hours at 200°C. Unless otherwise indicated all the compression set results that follow were determined in accordance with International Organization for Standardization (ISO) Test 815-1:2019 method A.

In the examples
component (e) was exemplified as copper phthalocyanine and was introduced into the composition in the form of a copper phthalocyanine additive comprising 15% copper phthalocyanine in avinyldimethylsiloxy polydimethylsiloxane having a viscosity of about 2000mPa.s at 25°C (using a Brookfield^{™} rotational viscometer with a cone plate arrangement with cone CP-52 at 3 rpm) and is referred to below as "Cupc";
Component (f) the cyanuric acid, biuret or a mixture thereof, when present was introduced in the form of a 5 molar aqueous solution commercially available as product number U0631 from Sigma-Aldrich (BioXtra, pH 7.5-9.5 (20°C, 5 M in H₂O);
Component (g) in the examples was hydromagnesite (Mg₅(CO₃)₄(OH)₂.4H₂O) which is sometimes referred to as light magnesium carbonate, sold under the Sigma-Aldrich product number 13118 (Magnesium Carbonate basic (purum, light, >/= 40% Mg (as MgO) basis, powder (light)))

A series of samples were prepared based around Elas. 1. The compositions thereof are provided in Table 2a.

**Table 2a: provides the composition of Ex. 1 and Comparative 1 (Comp. 1) and 2**

| | Elas. 1 (wt. %) | Cupc Add. (wt. %) | hydromagnesite (wt. %) | Cyanuric acid (wt. %) | Melamine (wt. %) | CDA-6 (wt. %) |
|---|---|---|---|---|---|---|
| Ex. 1 | 95.9 | 3 | 1 | 0.1 | | |
| Comp. 1 | 95.9 | 3 | 1 | | 0.1 | |
| Comp. 2 | 95.9 | 3 | 1 | | | 0.1 |

Melamine is otherwise known as 1,3,5-Triazine-2,4,6-triamine and has the following structure:

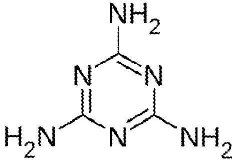

It and was introduced into the composition in the form of a fine crystalline material sold under the Sigma-Aldrich number M2659.

In Table 2b cured samples of Ex. 1 and comp. 1 and comp. 2 were tested for compression set (to the nearest whole number) after compression at 175°C for 22hrs and at 200°C hours for 22 hours, 168 hours. 504 hours and 1008 hours.

**Table 2b: Compression set results (to the nearest whole number) after compression at the temperatures indicated_ for periods up to 168 hours test using Ex. 1, comp. 1 and Comp. 2**

| | Ex.1 | Comp. 1 | Comp. 2 |
|---|---|---|---|
| Comp. Set after 22hrs compression at 175°C | 7 | 11 | 7 |
| Comp. Set after 22hrs compression at 200°C | 12 | 21 | 11 |
| Comp. Set after 168hrs compression at 200°C | 33 | 47 | 33 |
| Comp. Set after 504hrs compression at 200°C | 55 | | |
| Comp. Set after 1008hrs compression at 200°C | 72 | | |

A further set of results were undertaken. In the following case the samples had been post cured prior to analysis. The results are provided in Table 2c below.

**Table 2c: Compression set results after compression at 200°C for a period of 168h hours and after compression at 225°C for a period of 72 hours test using Ex. 1, comp. 1 and Comp. 2 after post cure for 4h at 200°C,**

| | Ex.1 | Comp. 1 | Comp. 2 |
|---|---|---|---|
| Comp. Set after 168hrs compression at 200°C (post cure 4h/200°C) | 30 | 41 | 32 |
| Comp. Set after 72hrs compression at 225°C (post cure 4h/200°C) | 44 | 51 | 58 |

While the two combinations containing cyanuric acid and CDA-6 respectively performed nearly equivalent at temperatures of 175 and 200°C, the combination of cyanuric acid/hydromagnesite/copper phthalocyanine exhibited clearly best performance at 72h/225°C. The sample set with melamine replacing cyanuric acid are exhibiting worse compression set results ever the whole temperature range.

## Claims

1. A hydrosilylation curable silicone rubber composition, which comprises the following components:
a) one or more polyorganosiloxanes containing at least two unsaturated groups, selected from alkenyl groups and alkynyl groups, per molecule and having a viscosity in a range of from 1000 mPa.s to 100,000 mPa.s at 25°C as measured according to the method of the description;
b) an organosilicon compound having at least two, alternatively at least three Si-H groups per molecule;
c) a silica reinforcing filler which is optionally hydrophobically treated;
d) a hydrosilylation catalyst comprising or consisting of a platinum group metal or a compound thereof;
e) a phthalocyanine compound or a metal derivative of such a compound, where the metal is copper, nickel, cobalt, iron, manganese, chromium, zinc, platinum, palladium, and vanadium and which is present in an amount of from 0.02 wt. % to 2.5 wt. % of the composition;
f) cyanuric acid, biuret or a mixture thereof in an amount of from 0.005 to 0.2 wt. % of the composition; and
g) one or more of magnesium hydroxide, magnesium carbonate, magnesium hydroxy carbonate or manganese carbonate in an amount 0.25 to 2.0 wt. % of the composition;
wherein the total wt. % of the composition is 100 wt. %.

2. A hydrosilylation curable silicone rubber composition in accordance with claim 1 wherein component (e) is copper phthalocyanine present in the composition in an amount of from 0.02 wt. % to 2.5 wt. % of the composition.

3. A hydrosilylation curable silicone rubber composition in accordance with any preceding claim wherein component (e) is delivered on its own or in a masterbatch or mixture with a dimethylvinyl terminated polydimethylsiloxane having a viscosity of from 1000mPa.s at 25°C to 25,000mPa.s at 25°C.

4. A hydrosilylation curable silicone rubber composition in accordance with any preceding claim wherein component (g) is a magnesium carbonate, a magnesium hydroxy carbonate or a mixture thereof in an amount of from in an amount 0.25 to 5.0 wt. % of the composition.

5. A hydrosilylation curable silicone rubber composition in accordance with claim 4 wherein the magnesium carbonate, magnesium hydroxy carbonate or mixture are selected from MgCO₃, MgCO₃.2H₂O, MgCO₃.3H₂O, MgCO₃.5H₂O, Mg₂(CO₃)(OH)₂.0.5H₂O, Mg₂(CO₃)(OH)₂.3H₂O, Mg₅(CO₃)₄(OH)₂.4H₂O, Mg₅(CO₃)₄(OH)₂.5H₂O, Mg₅(CO₃)₄(OH)₂.5-6H₂O and Mg₇(CO₃)₅(OH)₄.24H₂O.

6. A silicone elastomeric material which is the cured product of the hydrosilylation curable silicone rubber composition in any preceding claim.

7. A silicone elastomeric material obtained or obtainable from a process comprising the steps of mixing:
a) one or more polyorganosiloxanes containing at least two unsaturated groups, selected from alkenyl groups and alkynyl groups, per molecule and having a viscosity in a range of from 1000 mPa.s to 100,000 mPa.s at 25°C as measured according to the method of the description;
b) an organosilicon compound having at least two, alternatively at least three Si-H groups per molecule;
c) a silica reinforcing filler which is optionally hydrophobically treated;
d) a hydrosilylation catalyst comprising or consisting of a platinum group metal or a compound thereof;
e) a phthalocyanine compound or a metal derivative of such a compound, where the metal is copper, nickel, cobalt, iron, manganese, chromium, zinc, platinum, palladium, and vanadium and which is present in an amount of from 0.02 wt. % to 2.5 wt. % of the composition;
f) cyanuric acid, biuret or a mixture thereof in an amount of from 0.005 to 0.2 wt. % of the composition; and
g) one or more of magnesium hydroxide, magnesium carbonate, magnesium hydroxy carbonate or manganese carbonate in an amount 0.25 to 2.0 wt. % of the composition;
wherein the total wt. % of the composition is 100 wt. %;
and curing the composition at a temperature of from 80°C to 200°C.

8. A silicone elastomeric material in accordance with claims 6 or 7 which silicone elastomeric material has a compression set of no more than 20% after 22 hours compression at temperatures up to 190°C, alternatively up to 200°C, measured in accordance with industrial standard ISO 815-1:2019 method A.

9. A method of preparing a silicone elastomeric material in accordance with claim 6 comprising the steps of mixing:
a) one or more polyorganosiloxanes containing at least two unsaturated groups, selected from alkenyl groups and alkynyl groups, per molecule and having a viscosity in a range of from 1000 mPa.s to 100,000 mPa.s at at 25°C as measured according to the method of the description;
b) an organosilicon compound having at least two, alternatively at least three Si-H groups per molecule;
c) a silica reinforcing filler which is optionally hydrophobically treated;
d) a hydrosilylation catalyst comprising or consisting of a platinum group metal or a compound thereof;
e) a phthalocyanine compound or a metal derivative of such a compound, where the metal is copper, nickel, cobalt, iron, manganese, chromium, zinc, platinum, palladium, and vanadium and which is present in an amount of from 0.02 wt. % to 2.5 wt. % of the composition;
f) cyanuric acid, biuret or a mixture thereof in an amount of from 0.005 to 0.2 wt. % of the composition; and
g) one or more of magnesium hydroxide, magnesium carbonate, magnesium hydroxy carbonate or manganese carbonate in an amount 0.25 to 2.0 wt. % of the composition;
and curing the composition at a temperature of from 80°C to 200°C.

10. A method of preparing a silicone elastomeric material in accordance with claim 9 wherein component (g) is a magnesium carbonate, a magnesium hydroxy carbonate or a mixture thereof in an amount of from in an amount 0.25 to 5.0 wt. % of the composition.

11. A method of preparing a silicone elastomeric material in accordance with claim 10 wherein the magnesium carbonate, magnesium hydroxy carbonate or mixture are selected from MgCO₃, MgCO₃.2H₂O, MgCO₃.3H₂O, MgCO₃.5H₂O, Mg₂(CO₃)(OH)₂.0.5H₂O, Mg₂(CO₃)(OH)₂.3H₂O, Mg₅(CO₃)₄(OH)₂.4H₂O, Mg₅(CO₃)₄(OH)₂.5H₂O, Mg₅(CO₃)₄(OH)₂.5-6H₂O and Mg₇(CO₃)₅(OH)₄.24H₂O.

12. Use of a combination of components (e) (f) and (g) wherein
e) is a phthalocyanine compound or a metal derivative of such a compound, where the metal is copper, nickel, cobalt, iron, manganese, chromium, zinc, platinum, palladium, and vanadium and which is present in an amount of from 0.02 wt. % to 2.5 wt. % of the composition;
f) is cyanuric acid, biuret or a mixture thereof in an amount of from 0.005 to 0.2 wt. % of the composition; and
g) is one or more of magnesium hydroxide, magnesium carbonate, magnesium hydroxy carbonate or manganese carbonate in an amount 0.25 to 2.0 wt. % of the composition;
as a means of reducing the compression set as measured in accordance with industrial standard ISO 815-1:2019 method A in a silicone elastomeric material which is the cured product of a hydrosilylation curable silicone rubber composition, which otherwise comprises the following components:
a) one or more polyorganosiloxanes containing at least two unsaturated groups, selected from alkenyl groups and alkynyl groups, per molecule and having a viscosity in a range of from 1000 mPa.s to 100,000 mPa.s at 25°C as measured according to the method of the description;
b) an organosilicon compound having at least two, alternatively at least three Si-H groups per molecule;
c) a silica reinforcing filler which is optionally hydrophobically treated;
d) a hydrosilylation catalyst comprising or consisting of a platinum group metal or a compound thereof;
wherein the total wt. % of the composition is 100 wt. %.

13. Use in accordance with claim 12 wherein component (g) is magnesium carbonate, magnesium hydroxy carbonate or mixture thereof, selected from MgCO₃, MgCO₃.2H₂O, MgCO₃.3H₂O, MgCO₃.5H₂O, Mg₂(CO₃)(OH)₂.0.5H₂O, Mg₂(CO₃)(OH)₂.3H₂O, Mg₅(CO₃)₄(OH)₂.4H₂O, Mg₅(CO₃)₄(OH)₂.5H₂O, Mg₅(CO₃)₄(OH)₂.5-6H₂O and Mg₇(CO₃)₅(OH)₄.24H₂O.

14. Use of a silicone elastomeric material in accordance with claims 6, 7, or 8 in the manufacture of automotive parts, electrical and electronic parts; packaging parts; construction parts such as sealants; household parts; and gasket sealants.

15. Use of a hydrosilylation curable silicone rubber composition in accordance with any one of claims 1 to 5 in or for the manufacture of automotive parts, cable accessories; electrical and electronic parts; packaging parts; construction parts such as sealants; household parts; and gasket sealants.

## Patentansprüche

1. Hydrosilylierungshärtbare Silikonkautschukzusammensetzung, die die folgenden Komponenten umfassen:
a) ein oder mehrere Polyorganosiloxane, die mindestens zwei ungesättigte Gruppen, ausgewählt aus Alkenylgruppen und Alkinylgruppen, pro Molekül enthalten und eine Viskosität in einem Bereich von 1000 mPa.s bis 100 000 mPa.s bei 25 °C aufweisen, gemessen nach dem Verfahren der Beschreibung;
b) eine Organosiliciumverbindung, die mindestens zwei, alternativ mindestens drei Si-H-Gruppen pro Molekül aufweist;
c) einen Siliziumdioxid-Verstärkungsfüllstoff, der gegebenenfalls hydrophob behandelt ist;
d) einen Hydrosilylierungskatalysator, der eine Platinmetallgruppe oder eine Verbindung davon umfasst oder daraus besteht;
e) eine Phthalocyaninverbindung oder ein Metallderivat einer solchen Verbindung, wobei das Metall Kupfer, Nickel, Kobalt, Eisen, Mangan, Chrom, Zink, Platin, Palladium und Vanadium ist und welche in einer Menge von 0,02 Gew.-% bis 2,5 Gew.-% der Zusammensetzung vorliegt;
f) Cyanursäure, Biuret oder eine Mischung davon in einer Menge von 0,005 bis 0,2 Gew.-% der Zusammensetzung; und
g) eines oder mehrere von Magnesiumhydroxid, Magnesiumcarbonat, Magnesiumhydroxycarbonat oder Mangancarbonat in einer Menge von 0,25 bis 2,0 Gew.-% der Zusammensetzung;
wobei das Gesamtgewicht der Zusammensetzung 100 Gew.-% beträgt.

2. Hydrosilylierungshärtbare Silikonkautschukzusammensetzung nach Anspruch 1, wobei Komponente (e) Kupferphthalocyanin ist, das in der Zusammensetzung in einer Menge von 0,02 Gew.-% bis 2,5 Gew.-% der Zusammensetzung vorhanden ist.

3. Hydrosilylierungshärtbare Silikonkautschukzusammensetzung nach einem der vorstehenden Ansprüche, wobei Komponente (e) allein oder in einem Masterbatch oder einer Mischung mit einem dimethylvinylterminierten Polydimethylsiloxan mit einer Viskosität von 1000 mPa·s bei 25 °C bis 25.000 mPa·s bei 25 °C bereitgestellt wird.

4. Hydrosilylierungshärtbare Silikonkautschukzusammensetzung nach einem der vorstehenden Ansprüche, wobei Komponente (g) ein Magnesiumcarbonat, ein Magnesiumhydroxycarbonat oder eine Mischung davon in einer Menge von 0,25 bis 5,0 Gew.-% der Zusammensetzung ist.

5. Hydrosilylierungshärtbare Silikonkautschukzusammensetzung nach Anspruch 4, wobei das Magnesiumcarbonat, Magnesiumhydroxycarbonat oder die Mischung ausgewählt ist aus MgCO₃, MgCO₃.2H₂O, MgCO₃.3H₂O, MgCO₃.5H₂O, Mg₂(CO₃)(OH)₂.0,5H₂O, Mg₂(CO₃)(OH)₂.3H₂O, Mg₅(CO₃)₄(OH)₂.4H₂O, Mg₅(CO₃)₄(OH)₂.5H₂O, Mg₅(CO₃)₄(OH)₂.5-6H₂O und Mg₇(CO₃)₅(OH)₄.24H₂O.

6. Silikonelastomermaterial, das das gehärtete Produkt der hydrosilylierungshärtbaren Silikonkautschukzusammensetzung nach einem der vorstehenden Ansprüche ist.

7. Silikonelastomermaterial, erhalten oder erhältlich aus einem Prozess, umfassend die Schritte des Mischens:
a) ein oder mehrere Polyorganosiloxane, die mindestens zwei ungesättigte Gruppen, ausgewählt aus Alkenylgruppen und Alkinylgruppen, pro Molekül enthalten und eine Viskosität in einem Bereich von 1000 mPa.s bis 100.000 mPa.s bei 25 °C aufweisen, gemessen nach dem Verfahren der Beschreibung;
b) eine Organosiliciumverbindung, die mindestens zwei, alternativ mindestens drei Si-H-Gruppen pro Molekül aufweist;
c) einen Siliziumdioxid-Verstärkungsfüllstoff, der gegebenenfalls hydrophob behandelt ist;
d) einen Hydrosilylierungskatalysator, der eine Platinmetallgruppe oder eine Verbindung davon umfasst oder daraus besteht;
e) eine Phthalocyaninverbindung oder ein Metallderivat einer solchen Verbindung, wobei das Metall Kupfer, Nickel, Kobalt, Eisen, Mangan, Chrom, Zink, Platin, Palladium und Vanadium ist und welche in einer Menge von 0,02 Gew.-% bis 2,5 Gew.-% der Zusammensetzung vorliegt;
f) Cyanursäure, Biuret oder eine Mischung davon in einer Menge von 0,005 bis 0,2 Gew.-% der Zusammensetzung; und
g) eines oder mehrere von Magnesiumhydroxid, Magnesiumcarbonat, Magnesiumhydroxycarbonat oder Mangancarbonat in einer Menge von 0,25 bis 2,0 Gew.-% der Zusammensetzung;
wobei das Gesamtgewicht der Zusammensetzung 100 Gew.-% beträgt;
und Härten der Zusammensetzung bei einer Temperatur von 80 °C bis 200 °C.

8. Silikonelastomermaterial nach einem der Ansprüche 6 oder 7, wobei das Silikonelastomermaterial ein Druckverformungsset von nicht mehr als 20 % nach 22 Stunden Kompression bei Temperaturen bis zu 190 °C, alternativ bis zu 200 °C, aufweist, gemessen nach dem Industriestandard ISO 815-1:2019 Verfahren A.

9. Verfahren zur Herstellung eines Silikonelastomermaterial nach Anspruch 6, umfassend die Schritte des Mischens:
a) ein oder mehrere Polyorganosiloxane, die mindestens zwei ungesättigte Gruppen, ausgewählt aus Alkenylgruppen und Alkinylgruppen, pro Molekül enthalten und eine Viskosität in einem Bereich von 1000 mPa.s bis 100.000 mPa.s bei 25 °C aufweisen, gemessen nach dem Verfahren der Beschreibung;
b) eine Organosiliciumverbindung, die mindestens zwei, alternativ mindestens drei Si-H-Gruppen pro Molekül aufweist;
c) einen Siliziumdioxid-Verstärkungsfüllstoff, der gegebenenfalls hydrophob behandelt ist;
d) einen Hydrosilylierungskatalysator, der eine Platinmetallgruppe oder eine Verbindung davon umfasst oder daraus besteht;
e) eine Phthalocyaninverbindung oder ein Metallderivat einer solchen Verbindung, wobei das Metall Kupfer, Nickel, Kobalt, Eisen, Mangan, Chrom, Zink, Platin, Palladium und Vanadium ist und welche in einer Menge von 0,02 Gew.-% bis 2,5 Gew.-% der Zusammensetzung vorliegt;
f) Cyanursäure, Biuret oder eine Mischung davon in einer Menge von 0,005 bis 0,2 Gew.-% der Zusammensetzung; und
g) eines oder mehrere von Magnesiumhydroxid, Magnesiumcarbonat, Magnesiumhydroxycarbonat oder Mangancarbonat in einer Menge von 0,25 bis 2,0 Gew.-% der Zusammensetzung; und Härten der Zusammensetzung bei einer Temperatur von 80 °C bis 200 °C.

10. Verfahren zur Herstellung eines Silikonelastomermaterials nach Anspruch 9, wobei Komponente (g) ein Magnesiumcarbonat, ein Magnesiumhydroxycarbonat oder eine Mischung davon in einer Menge von 0,25 bis 5,0 Gew.-% der Zusammensetzung ist.

11. Verfahren zur Herstellung eines Silikonelastomermaterials nach Anspruch 10, wobei das Magnesiumcarbonat, Magnesiumhydroxycarbonat oder die Mischung ausgewählt sind aus MgCO₃, MgCO₃.2H₂O, MgCO₃.3H₂O, MgCO₃.5H₂O, Mg₂(CO₃)(OH)₂.0.5H₂O, Mg₂(CO₃)(OH)₂.3H₂O, Mg₅(CO₃)₄(OH)₂.4H₂O, Mg₅(CO₃)₄(OH)₂.5H₂O, Mg₅(CO₃)₄(OH)₂.5-6H₂O und Mg₇(CO₃)₅(OH)₄.24H₂O.

12. Verwendung einer Kombination von Komponenten (e) (f) und (g), wobei
e) eine Phthalocyaninverbindung oder ein Metallderivat einer solchen Verbindung ist, wobei das Metall Kupfer, Nickel, Kobalt, Eisen, Mangan, Chrom, Zink, Platin, Palladium und Vanadium ist und welche in einer Menge von 0,02 Gew.-% bis 2,5 Gew.-% der Zusammensetzung vorliegt;
f) Cyanursäure, Biuret oder eine Mischung davon in einer Menge von 0,005 bis 0,2 Gew.-% der Zusammensetzung ist; und
g) eines oder mehrere von Magnesiumhydroxid, Magnesiumcarbonat, Magnesiumhydroxycarbonat oder Mangancarbonat in einer Menge von 0,25 bis 2,0 Gew.-% der Zusammensetzung ist;
als Mittel zur Reduzierung des Druckverformungssets, gemessen nach Industriestandard ISO 815-1:2019 Verfahren A in einem Silikonelastomermaterial, das das gehärtete Produkt einer hydrosilylierungshärtbaren Silikonkautschukzusammensetzung ist, die ansonsten die folgenden Komponenten umfasst:
a) ein oder mehrere Polyorganosiloxane, die mindestens zwei ungesättigte Gruppen, ausgewählt aus Alkenylgruppen und Alkinylgruppen, pro Molekül enthalten und eine Viskosität in einem Bereich von 1000 mPa.s bis 100.000 mPa.s bei 25 °C aufweisen, gemessen nach dem Verfahren der Beschreibung;
b) eine Organosiliciumverbindung, die mindestens zwei, alternativ mindestens drei Si-H-Gruppen pro Molekül aufweist;
c) einen Siliziumdioxid-Verstärkungsfüllstoff, der gegebenenfalls hydrophob behandelt ist;
d) einen Hydrosilylierungskatalysator, der eine Platinmetallgruppe oder eine Verbindung davon umfasst oder daraus besteht;
wobei das Gesamtgewicht der Zusammensetzung 100 Gew.-% beträgt.

13. Verwendung nach Anspruch 12, wobei Komponente (g) Magnesiumcarbonat, Magnesiumhydroxycarbonat oder eine Mischung davon ist, ausgewählt aus MgCO₃, MgCO₃.2H₂O, MgCO₃.3H₂O, MgCO₃.5H₂O, Mg₂(CO₃)(OH)₂.0,5H₂O, Mg₂(CO₃)(OH)₂.3H₂O, Mg₅(CO₃)₄(OH)₂.4H₂O, Mg₅(CO₃)₄(OH)₂.5H₂O, Mg₅(CO₃)₄(OH)₂.5-6H₂O und Mg₇(CO₃)₅(OH)₄.24H₂O.

14. Verwendung eines Silikonelastomermaterials nach einem der Ansprüche 6, 7 oder 8 bei der Herstellung von Automobilteilen, elektrischen und elektronischen Teilen; Verpackungsteilen; Bauteilen wie Dichtmitteln; Haushaltsbestandteilen; und Dichtungsmitteln.

15. Verwendung einer hydrosilylierungshärtbaren Silikonkautschukzusammensetzung nach einem der Ansprüche 1 bis 5 in oder zur Herstellung von Automobilteilen, Kabelzubehör; elektrischen und elektronischen Teilen; Verpackungsteilen; Bauteilen wie Dichtmitteln; Haushaltsbestandteilen; und Dichtungsmitteln.

## Revendications

1. Composition de caoutchouc de silicone durcissable par hydrosilylation, qui comprend les composants suivants :
a) un ou plusieurs polyorganosiloxanes contenant au moins deux groupes insaturés, choisis parmi des groupes alcényle et des groupes alcynyle, par molécule et ayant une viscosité dans une plage allant de 1000 mPa.s à 100 000 mPa.s à 25 °C telle que mesurée selon le procédé de la description ;
b) un composé organosilicié ayant au moins deux, en variante au moins trois groupes Si-H par molécule ;
c) une charge renforçante de silice qui est facultativement rendue hydrophobe ;
d) un catalyseur d'hydrosilylation comprenant ou consistant en un métal du groupe du platine ou un composé de celui-ci ;
e) un composé phtalocyanine ou un dérivé métallique d'un tel composé, où le métal est cuivre, nickel, cobalt, fer, manganèse, chrome, zinc, platine, palladium et vanadium et qui est présent en une quantité allant de 0,02 % en poids à 2,5 % en poids de la composition ;
f) de l'acide cyanurique, du biuret ou un mélange de ceux-ci en une quantité allant de 0,005 à 0,2 % en poids de la composition ; et
g) un ou plusieurs parmi hydroxyde de magnésium, carbonate de magnésium, hydroxycarbonate de magnésium ou carbonate de manganèse en une quantité de 0,25 à 2,0 % en poids de la composition ;
dans laquelle le % en poids total de la composition vaut 100 % en poids.

2. Composition de caoutchouc de silicone durcissable par hydrosilylation selon la revendication 1 dans laquelle le composant (e) est la phtalocyanine de cuivre présente dans la composition en une quantité allant de 0,02 % en poids à 2,5 % en poids de la composition.

3. Composition de caoutchouc de silicone durcissable par hydrosilylation selon l'une quelconque revendication précédente dans laquelle le composant (e) est délivré par lui-même ou dans un mélange-maître ou un mélange avec un polydiméthylsiloxane à terminaison diméthylvinyle ayant une viscosité allant de 1000 mPa.s à 25 °C à 25 000 mPa.s à 25 °C.

4. Composition de caoutchouc de silicone durcissable par hydrosilylation selon l'une quelconque revendication précédente dans laquelle le composant (g) est un carbonate de magnésium, un hydroxycarbonate de magnésium ou un mélange de ceux-ci en une quantité allant d'en une quantité de 0,25 à 5,0 % en poids de la composition.

5. Composition de caoutchouc de silicone durcissable par hydrosilylation selon la revendication 4 dans laquelle le carbonate de magnésium, l'hydroxycarbonate de magnésium ou le mélange sont choisis parmi MgCO₃, MgCO₃.2H₂O, MgCO₃.3H₂O, MgCO₃.5H₂O, Mg₂(CO₃)(OH)₂.0.5H₂O, Mg₂(CO₃)(OH)₂.3H₂O, Mg₅(CO₃)₄(OH)₂.4H₂O, Mg₅(CO₃)₄(OH)₂.5H₂O, Mg₅(CO₃)₄(OH)₂.5-6H₂O et Mg₇(CO₃)₅(OH)₄.24H₂O.

6. Matériau élastomère de silicone qui est le produit durci de la composition de caoutchouc de silicone durcissable par hydrosilylation selon l'une quelconque revendication précédente.

7. Matériau élastomère de silicone obtenu ou pouvant être obtenu à partir d'un processus comprenant les étapes consistant à mélanger :
a) un ou plusieurs polyorganosiloxanes contenant au moins deux groupes insaturés, choisis parmi des groupes alcényle et des groupes alcynyle, par molécule et ayant une viscosité dans une plage allant de 1000 mPa.s à 100 000 mPa.s à 25 °C telle que mesurée selon le procédé de la description ;
b) un composé organosilicié ayant au moins deux, en variante au moins trois groupes Si-H par molécule ;
c) une charge renforçante de silice qui est facultativement rendue hydrophobe ;
d) un catalyseur d'hydrosilylation comprenant ou consistant en un métal du groupe du platine ou un composé de celui-ci ;
e) un composé phtalocyanine ou un dérivé métallique d'un tel composé, où le métal est cuivre, nickel, cobalt, fer, manganèse, chrome, zinc, platine, palladium et vanadium et qui est présent en une quantité allant de 0,02 % en poids à 2,5 % en poids de la composition ;
f) de l'acide cyanurique, du biuret ou un mélange de ceux-ci en une quantité allant de 0,005 à 0,2 % en poids de la composition ; et
g) un ou plusieurs parmi hydroxyde de magnésium, carbonate de magnésium, hydroxycarbonate de magnésium ou carbonate de manganèse en une quantité de 0,25 à 2,0 % en poids de la composition ;
dans lequel le % en poids total de la composition vaut 100 % en poids ;
et le durcissement de la composition à une température allant de 80 °C à 200 °C.

8. Matériau élastomère de silicone selon les revendications 6 ou 7 ce matériau élastomère de silicone ayant un amincissement de compression n'excédant pas 20 % après 22 heures de compression à des températures allant jusqu'à 190 °C, en variante jusqu'à 200 °C, lorsqu'on mesure conformément à la norme industrielle standard ISO 815-1:2019 procédé A.

9. Procédé de préparation d'un matériau élastomère de silicone selon la revendication 6 comprenant les étapes consistant à mélanger :
a) un ou plusieurs polyorganosiloxanes contenant au moins deux groupes insaturés, choisis parmi des groupes alcényle et des groupes alcynyle, par molécule et ayant une viscosité dans une plage allant de 1000 mPa.s à 100 000 mPa.s à 25 °C telle que mesurée selon le procédé de la description ;
b) un composé organosilicié ayant au moins deux, en variante au moins trois groupes Si-H par molécule ;
c) une charge renforçante de silice qui est facultativement rendue hydrophobe ;
d) un catalyseur d'hydrosilylation comprenant ou consistant en un métal du groupe du platine ou un composé de celui-ci ;
e) un composé phtalocyanine ou un dérivé métallique d'un tel composé, où le métal est cuivre, nickel, cobalt, fer, manganèse, chrome, zinc, platine, palladium et vanadium et qui est présent en une quantité allant de 0,02 % en poids à 2,5 % en poids de la composition ;
f) de l'acide cyanurique, du biuret ou un mélange de ceux-ci en une quantité allant de 0,005 à 0,2 % en poids de la composition ; et
g) un ou plusieurs parmi hydroxyde de magnésium, carbonate de magnésium, hydroxycarbonate de magnésium ou carbonate de manganèse en une quantité de 0,25 à 2,0 % en poids de la composition ; et le durcissement de la composition à une température allant de 80 °C à 200 °C.

10. Procédé de préparation d'un matériau élastomère de silicone selon la revendication 9 dans lequel le composant (g) est un carbonate de magnésium, un hydroxycarbonate de magnésium ou un mélange de ceux-ci en une quantité allant d'en une quantité 0,25 à 5,0 % en poids de la composition.

11. Procédé de préparation d'un matériau élastomère de silicone selon la revendication 10 dans lequel le carbonate de magnésium, l'hydroxycarbonate de magnésium ou le mélange sont choisis parmi MgCO₃, MgCO₃.2H₂O, MgCO₃.3H₂O, MgCO₃.5H₂O, Mg₂(CO₃)(OH)₂.0.5H₂O, Mg₂(CO₃)(OH)₂.3H₂O, Mg₅(CO₃)₄(OH)₂.4H₂O, Mg₅(CO₃)₄(OH)₂.5H₂O, Mg₅(CO₃)₄(OH)₂.5-6H₂O et Mg₇(CO₃)₅(OH)₄.24H₂O.

12. Utilisation d'une combinaison de composants (e) (f) et (g) dans laquelle
e) est un composé phtalocyanine ou un dérivé métallique d'un tel composé, où le métal est cuivre, nickel, cobalt, fer, manganèse, chrome, zinc, platine, palladium et vanadium et qui est présent en une quantité allant de 0,02 % en poids à 2,5 % en poids de la composition ;
f) est de l'acide cyanurique, du biuret ou un mélange de ceux-ci en une quantité allant de 0,005 à 0,2 % en poids de la composition ; et
g) est un ou plusieurs parmi hydroxyde de magnésium, carbonate de magnésium, hydroxycarbonate de magnésium ou carbonate de manganèse en une quantité de 0,25 à 2,0 % en poids de la composition ;
en tant que moyen de réduction de l'amincissement de compression lorsqu'on mesure conformément à la norme industrielle standard ISO 815-1:2019 procédé A dans un matériau élastomère de silicone qui est le produit durci d'une composition de caoutchouc de silicone durcissable par hydrosilylation, qui comprend autrement les composants suivants :
a) un ou plusieurs polyorganosiloxanes contenant au moins deux groupes insaturés, choisis parmi des groupes alcényle et des groupes alcynyle, par molécule et ayant une viscosité dans une plage allant de 1000 mPa.s à 100 000 mPa.s à 25 °C telle que mesurée selon le procédé de la description ;
b) un composé organosilicié ayant au moins deux, en variante au moins trois groupes Si-H par molécule ;
c) une charge renforçante de silice qui est facultativement rendue hydrophobe ;
d) un catalyseur d'hydrosilylation comprenant ou consistant en un métal du groupe du platine ou un composé de celui-ci ;
dans laquelle le % en poids total de la composition vaut 100 % en poids.

13. Utilisation selon la revendication 12 dans laquelle le composant (g) est du carbonate de magnésium, de l'hydroxycarbonate de magnésium ou un mélange de ceux-ci, choisi parmi MgCO₃, MgCO₃.2H₂O, MgCO₃.3H₂O, MgCO₃.5H₂O, Mg₂(CO₃)(OH)₂.0.5H₂O, Mg₂(CO₃)(OH)₂.3H₂O, Mg₅(CO₃)₄(OH)₂.4H₂O, Mg₅(CO₃)₄(OH)₂.5H₂O, Mg₅(CO₃)₄(OH)₂.5-6H₂O et Mg₇(CO₃)₅(OH)₄.24H₂O.

14. Utilisation d'un matériau élastomère de silicone selon les revendications 6, 7 ou 8 dans la fabrication de pièces automobiles, de pièces électriques et électroniques ; de pièces d'emballage ; de pièces de construction telles que des produits d'étanchéité ; de pièces domestiques ; et de produits d'étanchéité de joint.

15. Utilisation d'une composition de caoutchouc de silicone durcissable par hydrosilylation selon l'une quelconque des revendications 1 à 5 dans ou pour la fabrication de pièces automobiles, d'accessoires de câble ; de pièces électriques et électroniques ; de pièces d'emballage ; de pièces de construction telles que des produits d'étanchéité ; de pièces domestiques ; et de produits d'étanchéité de joint.
